# EUROPEAN PATENT APPLICATION

(11) **EP 3 188 447 A1**
(43) Date of publication of application: **05.07.2017**
(21) Application number: 16001056.7
(22) Date of filing: 10.05.2016
(51) Int. Cl.: H04L 29/08, H04L 12/28, G06F 11/14

(54) **Z-WAVE GATEWAY BACKUP**

(30) Priority: 29.12.2015 TW 104144269
(71) Applicant: Connection Technology Systems Inc., New Taipei City 221 (TW)
(72) Inventor: Chen, Yu-Hsin, 221 New Taipei City (TW); Chang, Tzu-Chiang, 221 New Taipei City (TW)
(74) Representative: Zeitler Volpert Kandlbinder Patent- und Rechtsanwälte Partnerschaft mbB

(57) **Abstract**

A Z-Wave gateway includes a Z-Wave wireless communication module, a memory device, an arbitration circuit module and a central processing unit. The Z-Wave wireless communication module is in wireless communication with the plural sensors to receive information from the plural sensors and generate plural status and configuration data corresponding to the plural sensors. The plural status and configuration data are stored in the memory device. The arbitration circuit module is electrically connected with the Z-Wave wireless communication module and the memory device. When the central processing unit controls the arbitration circuit module to suspend a circuit between the Z-Wave wireless communication module and the memory device, the central processing unit controls the arbitration circuit module to capture the plural status and configuration data from the memory device and transmit the plural status and configuration data to a storage medium, so that the plural status and configuration data are stored as a backup in the storage medium.

## Description

### FIELD OF THE INVENTION

The present invention relates to a communication technology, and more particularly to a Z-wave gateway.

### BACKGROUND OF THE INVENTION

As the applications of the internet are expanded, the concepts of Internet of Things (loT) technology are progressively developed. The loT is the network of physical objects and becomes the important route of industrial development. Nowadays, gateways are used for establishing communication channels between different household appliances.

For example, the wireless communication technology of Z-Wave has been matured. Nowadays, several thousands of Z-Wave products are introduced into the market. The Z-Wave wireless communication technology has many benefits such as low power consumption, high transmission reliability and low radiation. Consequently, the Z-Wave wireless products become more popular. For allowing plural Z-Wave wireless products to communicate with each other, a gateway is required to establish the communication channels between different Z-Wave wireless products and to connect with the Internet.

However, for controlling different Z-Wave wireless products (e.g., monitors, lamps, air conditioners or door lock switches), these Z-Wave wireless products have to be individually included in the Z-Wave network in advance before these Z-Wave wireless products are used. Consequently, the basic safety requirements can be achieved. A conventional method of including a Z-Wave wireless product into the Z-Wave network is that, at each inclusion procedure, a user sends a command to the gateway, to make the gateway be in an inclusion standby mode. Then, the Z-Wave wireless product issues an inclusion request. After the gateway receives the inclusion request, the Z-Wave wireless product is included in the Z-Wave network. However, the conventional method of including the Z-Wave wireless product in the Z-Wave network has some drawbacks. For example, one gateway is able to communicate with 232 Z-Wave wireless products. If the original gateway is breakdown and the original gateway should be replaced with a new one, all of the Z-Wave wireless products have to be restored to the factory default values and these Z-Wave wireless products need to be individually included in this new gateway once again. The above operating process is troublesome and time-consuming.

Therefore, there is a need of providing an improved backup technology of a Z-wave gateway in order to overcome the above drawbacks.

### SUMMARY OF THE INVENTION

For overcoming the drawbacks of the conventional technology, the present invention provides a Z-wave gateway. After the Z-wave gateway is replaced with a new one, it is not necessary to individually include all nearby sensors in the new Z-Wave gateway. Consequently, the Z-wave gateway is user-friendly, and the operating time is largely reduced.

In accordance with an aspect of the present invention, there is provided a Z-Wave gateway. The Z-Wave gateway is in communication with plural external sensors. The Z-Wave gateway includes Z-Wave wireless communication module, a memory device, an arbitration circuit module and a central processing unit. The Z-Wave wireless communication module is in wireless communication with the plural sensors to receive information from the plural sensors and generate plural status and configuration data corresponding to the plural sensors. The memory device is electrically connected with the Z-Wave wireless communication module. After the plural status and configuration data from the Z-Wave wireless communication module are received by the memory device, the plural status and configuration data are stored in the memory device. The arbitration circuit module is electrically connected with the Z-Wave wireless communication module and the memory device. The central processing unit is electrically connected with the arbitration circuit module. When the central processing unit controls the arbitration circuit module to suspend a circuit between the Z-Wave wireless communication module and the memory device, the central processing unit controls the arbitration circuit module to capture the plural status and configuration data from the memory device and transmit the plural status and configuration data to a storage medium, so that the plural status and configuration data are also stored as a backup in the storage medium.

In an embodiment, the Z-Wave wireless communication module and the memory device are electrically connected with each other.

In an embodiment, the arbitration circuit module comprises a control circuit and a capture wire. The control circuit is electrically connected with the Z-Wave wireless communication module, and the capture wire is electrically connected to the memory device.

In an embodiment, the memory device is a non-volatile memory.

In an embodiment, the plural status and configuration data are outputted from the central processing unit to the storage medium as the backup through a Universal Serial Bus (USB) interface, and/or the backup of the plural status and configuration data in the storage medium is restored to the memory device of the Z-Wave gateway or a memory device of an additional Z-Wave gateway through the Universal Serial Bus interface.

In an embodiment, the plural status and configuration data are outputted from the central processing unit to the storage medium as the backup in response to a command, and/or the backup of the plural status in the storage medium is restored to the memory device of the Z-Wave gateway or a memory device of an additional Z-Wave gateway.

In an embodiment, the plural status and configuration data include a data of the Z-Wave wireless communication module, a sensor status data and/or a sensor configuration data.

In an embodiment, the Z-Wave gateway further includes a network communication module. The Z-Wave gateway is connected with a cloud platform via the network communication module.

From the above descriptions, the Z-Wave gateway of the present invention is equipped with the arbitration circuit module for outputting the status and configuration data of the memory device to a storage medium and storing the status and configuration data as a backup in the storage medium. Once the Z-Wave gateway has a breakdown, the user may transmit the status and configuration data of the storage medium to a new Z-Wave gateway (or the repaired Z-Wave gateway). Consequently, the new Z-Wave gateway has the status of the original Z-Wave gateway without the need of individually including all nearby sensors in the new Z-Wave gateway. That is, the new Z-Wave gateway can communicate with all of the nearby sensors at a fast speed. In other words, the sensors can be in communication with the new Z-Wave gateway without the needs of being restored to the factory default values. Moreover, it is not necessary to individually include all nearby sensors in the new Z-Wave gateway. Consequently, the operating time of re-including the sensors will be largely reduced.

The above objects and advantages of the present invention will become more readily apparent to those ordinarily skilled in the art after reviewing the following detailed description and accompanying drawings.

### BRIEF DESCRIPTION OF THE DRAWINGS

FIG. 1 schematically illustrates the wireless communication between a Z-Wave gateway and plural nearby sensors according to an embodiment of the present invention; and
FIG. 2 is a schematic functional block diagram illustrating the inner components of the Z-Wave gateway according to the embodiment of the present invention.

### DETAILED DESCRIPTION OF THE PREFERRED EMBODIMENT

The present invention provides a Z-wave gateway. The Z-wave gateway can communicate with plural electrical appliances such as monitors, lamps, air conditioners, window curtains, door locks, surveillance devices, and so on. Moreover, the Z-wave gateway can communicate with an intelligent device (e.g., a personal computer, a smart phone or a remote controller) in order to receive a command from the intelligent device.

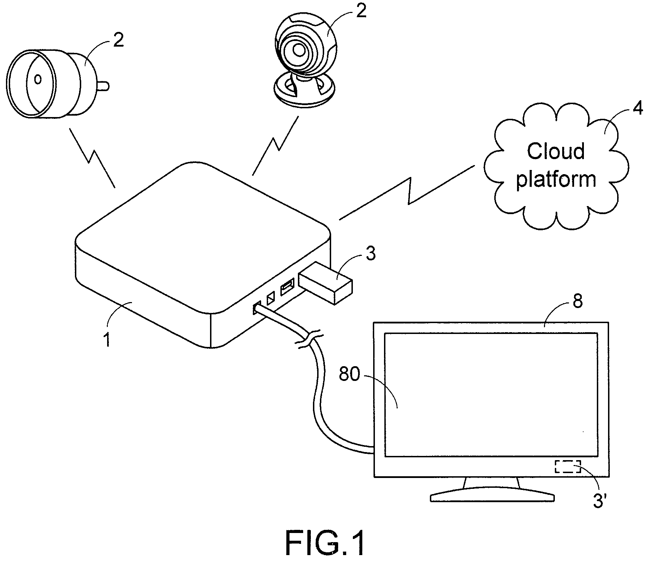

FIG. 1 schematically illustrates the wireless communication between a Z-Wave gateway and plural nearby sensors according to an embodiment of the present invention. In this context, the sensor 2 used herein indicates a circuit that is able to communicate with the Z-Wave gateway 1 according to a Z-wave communication protocol. In other words, the sensor 2 comprises a Z-Wave wireless product (e.g., a monitor, a lamp, an air conditioner, a window curtain, a door lock or a surveillance device) or a transmitter/receiver circuit that supports a Z-wave wireless bidirectional communication protocol.

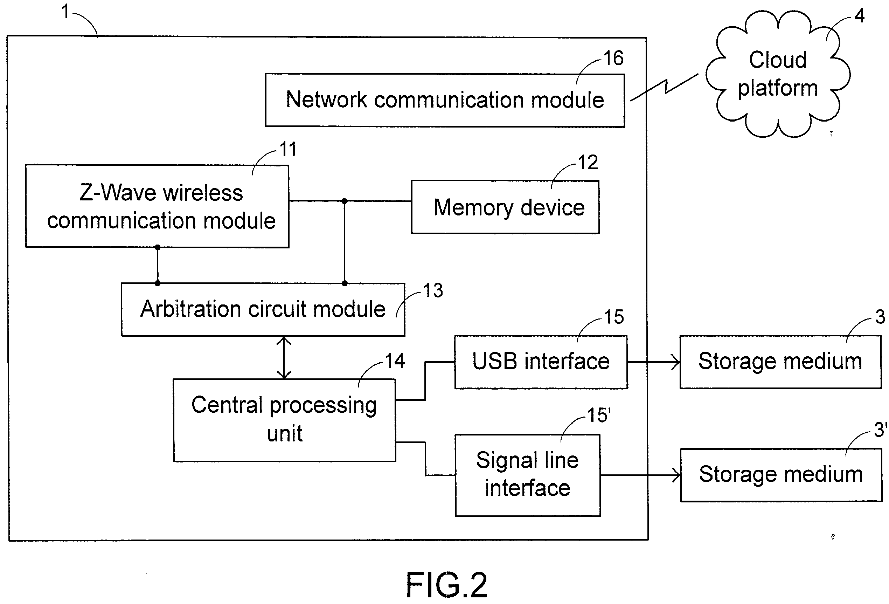

The Z-Wave gateway 1 comprises a network communication module 16 (see FIG. 2). The network communication module 16 has a networking function. In case that the network communication module 16 is directly connected with a home network, the user can realize the current statuses of the electrical appliances in the home everywhere and anytime. Moreover, the Z-Wave gateway 1 can be connected with a host of a network service provider via the network communication module 16, and connected with a cloud platform 4 via the network communication module 16 through network connection. In case that a cloud service is integrated into the Z-Wave gateway 1, the user in an external environment can link to the Z-Wave gateway 1 to control the household appliances, realize the statuses of the electronic appliances and receive notification messages.

FIG. 2 is a schematic functional block diagram illustrating the inner components of the Z-Wave gateway according to the embodiment of the present invention. Please refer to FIGS. 1 and 2. The Z-Wave gateway 1 comprises a Z-Wave wireless communication module 11, a memory device 12, an arbitration circuit module 13 and a central processing unit 14. The Z-Wave wireless communication module 11 is in communication with plural external sensors 2 according to the Z-wave communication protocol. Similarly, each sensor 2 has to be individually included in the network of the Z-Wave gateway 1 before use. After a specified sensor 2 is included in the network of the Z-Wave gateway 1, the Z-Wave wireless communication module 11 generates a corresponding status and configuration data, and the status and configuration data simultaneously transmitted to the memory device 12 for storage. The status and configuration data at least contains a record about the inclusion of the specified sensor 2. In addition, the status and configuration data is kept up-to-date.

In an embodiment, the status and configuration data comprises the data of the Z-Wave wireless communication module 11, a sensor status data and/or a sensor configuration data. For example, the data of the Z-Wave wireless communication module 11 indicates the inclusion data about a specified lamp; the sensor status and configuration data indicates the on/off status of the specified lamp at this moment; and the sensor configuration data indicates the configuration data about the predetermined time sequence of turning on/off the specified lamp. The examples of the status and configuration data are presented herein for purpose of illustration and description only.

Preferably, the memory device 12 is a non-volatile memory. The non-volatile memory is advantageous because the stored status and configuration data in the non-volatile memory are retained even if no electricity is continuously supplied to the non-volatile memory.

Hereinafter, the operations of the arbitration circuit module 13 will be described as follows. The arbitration circuit module 13 is used for providing a special circuit loop to acquire the status and configuration data from the memory device 12. In an embodiment, the Z-Wave wireless communication module 11 and the memory device 12 are electrically connected with each other to let the memory device 12 be accessible to the Z-wave wireless communication module 11 In this embodiment, the arbitration circuit module 13 comprises a control circuit (not shown) and a capture wire. The control circuit is electrically connected with the Z-Wave wireless communication module 11, and the capture wire is electrically connected to the memory device. According to this circuitry configuration, the present invention has the following features. For example, when the central processing unit 14 controls the arbitration circuit module 13 to capture the status and configuration data from the memory device 12, a circuit between the Z-Wave wireless communication module 11 and the memory device 12 is suspended. Consequently, after the arbitration circuit module 13 captures the status and configuration data from the memory device 12, the status and configuration data is transmitted to a storage medium 3 and stored as a backup.

The present invention provides two approaches of storing the status and configuration data as the backup. In accordance with a first approach, the Z-Wave gateway 1 comprises a Universal Serial Bus (USB) interface 15. The status and configuration data are outputted from the central processing unit 14 to the storage medium 3 through the USB interface 15. For example, the storage medium 3 is a USB flash drive. That is, the status and configuration data are backed up to the USB flash drive. Once the Z-Wave gateway 1 has a breakdown, the user may take a new Z-Wave gateway (or the repaired Z-Wave gateway 1) and restore the status and configuration data of the USB flash drive to a memory device of the new Z-Wave gateway. Consequently, the new Z-Wave gateway can be in communication with the sensors 2 that have been included in the original Z-Wave gateway. In other words, the sensors 2 can be in communication with the new Z-Wave gateway without the step of being recovered to the factory default values. Moreover, it is not necessary to individually include all nearby sensors 2 in the new Z-Wave gateway. Consequently, the operating time of re-including the sensors 2 will be largely reduced.

In accordance with a second approach, the Z-Wave gateway 1 is connected with a computer 8. Moreover, the Z-Wave gateway 1 comprises a corresponding signal line interface 15' for transmitting data to the computer 8 and displaying data on the computer 8. Consequently, the status and configuration data can be outputted to the computer 8 as a backup in response to a command inputted by the user. By operating a user interface (UI) 80 of the computer 8, the user may allow the central processing unit 14 to control the arbitration circuit module 13 to output the status and configuration data to a storage medium 3'. For example, the storage medium 3' is a hard disk of the computer 8. Consequently, the backup of the status and configuration data is stored in the hard disk. Once the Z-Wave gateway 1 has a breakdown, the user may take a new Z-Wave gateway (or the repaired Z-Wave gateway 1) and restore the status and configuration data of the storage medium 3' to a memory device of the new Z-Wave gateway. Consequently, the new Z-Wave gateway can be in communication with the sensors 2 that have been included in the original Z-Wave gateway. Under this circumstance, the operating time of re-including the sensors 2 will be largely reduced.

From the above descriptions, the Z-Wave gateway of the present invention is equipped with the arbitration circuit module for outputting the status and configuration data of the memory device to a storage medium and storing the status and configuration data as a backup in the storage medium. Once the Z-Wave gateway has a breakdown, the user may transmit the status and configuration data of the storage medium to a new Z-Wave gateway. Consequently, the new Z-Wave gateway has the status of the original Z-Wave gateway without the need of individually including all nearby sensors in the new Z-Wave gateway. That is, the new Z-Wave gateway can communicate with all of the nearby sensors at a fast speed.
While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A Z-Wave gateway (1) in communication with plural external sensors, **characterized in that** the Z-Wave gateway comprising:
a Z-Wave wireless communication module (11) in wireless communication with the plural sensors (2) to receive information from the plural sensors (2) and generate plural status and configuration data corresponding to the plural sensors (2);
a memory device (12) electrically connected with the Z-Wave wireless communication module (11), wherein after the plural status and configuration data from the Z-Wave wireless communication module (11) are received by the memory device (12), the plural status and configuration data are stored in the memory device (12);
an arbitration circuit module (13) electrically connected with the Z-Wave wireless communication module (11) and the memory device (12); and
a central processing unit (14) electrically connected with the arbitration circuit module, wherein when the central processing unit (14) controls the arbitration circuit module (13) to suspend a circuit between the Z-Wave wireless communication module (11) and the memory device (12), the central processing unit (14) controls the arbitration circuit module (13) to capture the plural status and configuration data from the memory device (12) and transmit the plural status and configuration data to a storage medium (3), so that the plural status and configuration data are stored as a backup in the storage medium (3).

2. The Z-Wave gateway (1) according to claim 1, **characterized in that** the Z-Wave wireless communication module (11) and the memory device (12) are electrically connected with each other.

3. The Z-Wave gateway (1) according to claim 2, **characterized in that** the arbitration circuit module (13) comprises a control circuit and a capture wire, wherein the control circuit is electrically connected with the Z-Wave wireless communication module (11), and the capture wire is electrically connected to the memory device.

4. The Z-Wave gateway (1) according to claim 3, **characterized in that** the memory device (12) is a non-volatile memory.

5. The Z-Wave gateway (1) according to claim 1, **characterized in that** the plural status and configuration data are outputted from the central processing unit (14) to the storage medium (3) as the backup through a Universal Serial Bus (USB) interface (15), and/or the backup of the plural status and configuration data in the storage medium (3) is restored to the memory device (12) of the Z-Wave gateway (1) or a memory device of an additional Z-Wave gateway through the Universal Serial Bus interface (15).

6. The Z-Wave gateway (1) according to claim 1, **characterized in that** the plural status and configuration data are outputted from the central processing unit (14) to the storage medium (3) as the backup in response to a command, and/or the backup of the plural status in the storage medium (3) is restored to the memory device (12) of the Z-Wave gateway or a memory device of an additional Z-Wave gateway.

7. The Z-Wave gateway (1) according to claim 1, **characterized in that** the plural status and configuration data comprise a data of the Z-Wave wireless communication module (11), a sensor status data and/or a sensor configuration data.

8. The Z-Wave gateway (1) according to claim 1, **characterized in that** the Z-Wave gateway further comprises a network communication module (16), wherein the Z-Wave gateway (1) is connected with a cloud platform (4) via the network communication module (16).
